# EUROPÄISCHE PATENTSCHRIFT

(11) **EP 1 795 410 B1**
(45) Veröffentlichungstag und Bekanntmachung des Hinweises auf die Patenterteilung: **04.02.2009**
(21) Anmeldenummer: 06124992.6
(22) Anmeldetag: 29.11.2006
(51) Int. Cl.: B60T 1/00

(54) **Vorrichtung zur Betätigung einer Parkbremse**
Device for actuating a parking brake
dispositif pour l'actuation d'un frein de stationnement

(30) Priorität: 03.12.2005 DE 102005057794
(43) Veröffentlichungstag der Anmeldung: 13.06.2007
(73) Patentinhaber: Deere & Company, Moline, IL 61265-8098 (US)
(72) Erfinder: Tarasinski Dr., Nicolai, 67227, Frankenthal (DE); Gugel, Rainer, 68163, Mannheim (DE)
(74) Vertreter: Magin, Ludwig Bernhard

(56) Entgegenhaltungen:
- EP-A2- 1 199 233
- DE-A1- 10 037 565
- US-A1- 2005 258 683

## Beschreibung

Die Erfindung betrifft eine Vorrichtung zur Betätigung einer Parkbremse eines Fahrzeugs, insbesondere eines landwirtschaftlichen oder industriellen Nutzfahrzeugs. Die Vorrichtung umfasst eine Betätigungsmechanik und einen Aktuator. Die Betätigungsmechanik ist mittels einer Vorspannkraft in eine eingerückte Position drängbar. Mittels des Aktuators ist gegen die Vorspannkraft eine Bewegung der Betätigungsmechanik in eine ausgerückte Position ausführbar. Die Betätigungsmechanik weist einen drehbar um eine Achse gelagerten Parksperrenarm auf, welcher in der eingerückten Position formschlüssig in ein drehbar gelagertes, zu bremsendes Bauteil eingreift. Des Weiteren betrifft die vorliegende Erfindung ein Fahrzeug, insbesondere ein landwirtschaftliches oder industrielles Nutzfahrzeug, ganz besonders bevorzugt einen Traktor, mit einer Parkbremse.

Parksperren sind sicherheitskritische Bauteile eines Fahrzeugs. Die Parksperre dient dem Verhindern des Wegrollens des Fahrzeugs auch im ausgeschalteten und somit energielosen Zustand. Üblicherweise wird eine Parksperre federbelastet eingelegt, das heißt es ist eine Vorspannkraft vorgesehen, welche die Betätigungsmechanik stets in eine eingerückte Position der Parkbremse drängt (also insbesondere in dem energielosen Zustand des Fahrzeugs), wenn nicht ein Aktuator entgegen der Vorspannkraft die Betätigungsmechanik in eine ausgerückte Position verbringt. Wird das Fahrzeug beispielsweise am Hang abgestellt, lasten zum Teil erhebliche Kräfte auf den Bauteilen der Parksperre, die sich aus der Hangabtriebskraft des Fahrzeugs ergeben. Zur Entriegelung der Parksperre sind in diesem Fall entsprechend große Kräfte notwendig. Diese Kräfte sind insbesondere abhängig von den Reibverhältnissen, welche sich durch die konstruktiven Eigenschaften der Parksperre und insbesondere der Betätigungsmechanik ergeben.

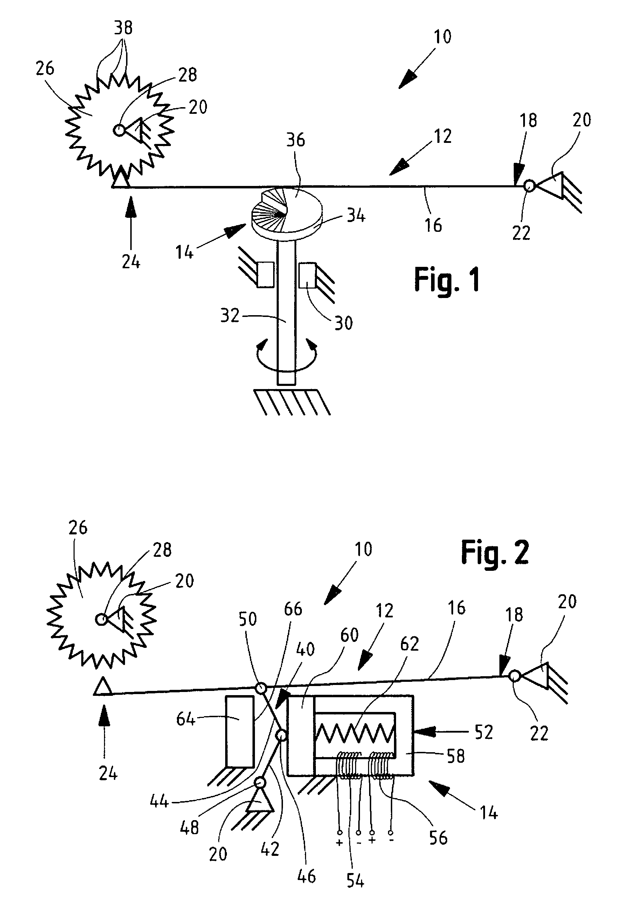

Bei Traktoren der Anmelderin wird ein einseitig im Getriebegehäuse gelagerter Parksperrenarm verwendet. Dieser Arm kann eine Schwenkbewegung um einige Grad durchführen und dadurch ein wellenfestes Zahnrad auf der Abtriebswelle im Getriebe blockieren. Die Schwenkbewegung ist durch eine verdrehbare Kulisse blockierbar. Die Kulisse stützt sich über einen Gehäusedeckel am Getriebegehäuse ab. Eine solche Anordnung ist schematisch in Fig. 1 gezeigt und in der dazugehörenden Figurenbeschreibung näher ausgeführt. Die Verdrehung dieser Kulisse ist insbesondere problematisch, wenn die Bauteile der Parksperre unter großer Last stehen, wenn also das Fahrzeug z.B. am steilen Hang abgestellt ist. Auch sind an die Bauteile dieser Anordnung hohe Anforderungen an die Toleranz gestellt, so dass die Herstellung dieser Bauteile aufwendig ist und bei der Montage unter Umständen zeitaufwendige Nacharbeiten durchzuführen sind, falls eine entsprechende Funktionsüberprüfung dieser Parksperre das erforderlich machen sollten.

Des weiteren ist aus der US 2005/0258683 A1 eine Parksperre für ein mit Scheibenbremsen ausgestattetes Fahrzeug bekannt, wobei die Scheibenbremsen mittels elektrischer Stellmotoren betätigbar sind. Zur Verwirklichung einer Parksperrenfunktion lässt sich jeder der Stellmotoren mittels eines Verriegelungsmechanismus in seinem momentanen Stellzustand arretieren. Der Verriegelungsmechanismus umfasst zu diesem Zweck ein mit einem Rotor des Stellmotors verbundenes Sperrrad, einen drehbar befestigten Schwenkarm sowie eine an dem Schwenkarm angeordnete Sperrklinke zur Ineingriffnahme in eine am Außenumfang des Sperrrads ausgebildete Zahnung, so dass der Schwenkarm in seiner eingerückten Position eine Drehung des Sperrrads blockiert und der momentane Stellzustand des Stellmotors arretiert wird. Zur Entriegelung der Parksperre wird der Schwenkarm mittels eines elektrischen Aktuators entgegen der Kraft einer unter Vorspannung stehenden Feder aus der eingerückten Position in eine ausgerückte Position überführt. Bei betätigter Parksperre können vor allem im energielosen Zustand der Stellmotoren erhebliche Kräfte auf dem Verriegelungsmechanismus lasten, so dass die zur Entriegelung notwendigen Kräfte dementsprechend groß sind.

Der vorliegenden Erfindung liegt daher die Aufgabe zugrunde, eine Vorrichtung und ein Fahrzeug der eingangs genannten Art anzugeben und weiterzubilden, durch welche bzw. durch welches die vorgenannten Probleme überwunden werden. Insbesondere soll eine Vorrichtung zur Betätigung einer Parkbremse angegeben werden, welche auch bei hohen Belastungen der Bauteile der Parkbremse relativ einfach betätigbar ist und bei welcher die Anforderungen an die Toleranzen verringert sind.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Vorrichtung der eingangs genannten Art dadurch gekennzeichnet, dass die Betätigungsmechanik eine Kniegelenkanordnung aufweist. Die Kniegelenkanordnung und der Parksperrenarm wirken derart miteinander zusammen, dass die Bewegung des Parksperrenarms von der Kniegelenkanordnung in Abhängigkeit einer Betätigung des Aktuators ausführbar ist.

Unter einer Kniegelenkanordnung im Sinn der vorliegenden Erfindung ist insbesondere ein einseitig knickbarer Kniehebel zu verstehen, der einen abgeknickten und einen gestreckten Zustand aufweist. Der Kniehebel ist relativ zu dem Parksperrenarm derart angeordnet, dass in einem abgeknickten Zustand des Kniehebels die Betätigungsmechanik eine Bewegung in eine ausgerückte Position ausführen kann. In dem gestreckten, d.h. nicht abgeknickten Zustand des Kniehebels befindet sich die Betätigungsmechanik - und insbesondere der Parksperrenarm - in der eingerückten Position.

Erfindungsgemäß ist zunächst erkannt worden, dass die im eingerückten Zustand der Betätigungsmechanik auf den Parksperrenarm wirkende und eine Drehbewegung des Parksperrenarms um die Drehachse begünstigende Kraft unter Umständen sehr groß ist, falls das Fahrzeug an einem Hang abgestellt ist. Zum Überführen des Parksperrenarms in eine ausgerückte Position kann eine aus dem Stand der Technik bekannte Kulisse dann nur unter großem Kraftaufwand verdreht werden, da eine Querbewegung der Kulissenoberfläche relativ zu dem Parksperrenarm erfolgen muss und hierzu unter Umständen hohe Reibungskräfte überwunden werden müssen. Eine Zusammenwirkung der Kniegelenkanordnung mit dem Parksperrenarm stellt hierbei eine günstigere Konstellation dar, da die die Drehbewegung des Parksperrenarms um die Drehachse begünstigende Kraft im Wesentlichen in Richtung der Kniegelenkanordnung gerichtet ist und zum Verbringen des Parksperrenarms in die ausgerückte Position lediglich die Ausbrechkraft der Kniegelenkanordnung zu überwinden ist, so dass die Kniegelenkanordnung einen abgeknickten Zustand jedenfalls ohne ein Überwinden von Reibungskräften einnehmen kann**.**

In einer ganz besonders bevorzugten Ausführungsform weist die Kniegelenkanordnung zwei miteinander gelenkig verbundene Arme oder Schenkel auf. Eine gelenkige Verbindung kann in diesem Fall eine um eine Achse gegeneinander verdrehbare Gelenkverbindung sein und könnte also beispielsweise durch ein Gabelgelenk oder ein Achsgelenk gebildet sein. Mit anderen Worten weist eine solche Gelenkverbindung bevorzugt lediglich einen Freiheitsgrad bezüglich der Verdrehung der zwei Arme beziehungsweise Schenkel auf.

Weiterhin könnte der erste Arm der Kniegelenkanordnung drehbar um eine Achse an einem Gehäuseteil gelagert sein. Alternativ oder zusätzlich könnte der zweite Arm der Kniegelenkanordnung gelenkig mit dem Parksperrenarm verbunden sein. Die Gelenkverbindung zwischen dem ersten Arm der Kniegelenkanordnung und dem Gehäuseteil könnte ebenfalls ein Gabelgelenk oder ein Achsgelenk aufweisen. Eine solche Gelenkverbindung könnte beispielsweise mittels eines Bolzens und einer entsprechenden Bohrung jeweils im Gehäuseteil und in dem ersten Arm realisiert werden. Die Gelenkverbindung zwischen dem zweiten Arm der Kniegelenkanordnung und dem Parksperrenarm könnte ein Gabelgelenk oder ein Achsgelenk aufweisen. Somit weist bevorzugt eine solche Gelenkverbindung ebenfalls lediglich einen Freiheitsgrad auf.

Bevorzugt ist der Parksperrenarm derart ausgebildet, dass ein von der Drehachse beabstandeter Teil des Parksperrenarms in das drehbar gelagerte und zu bremsende Bauteil formschlüssig eingreift, falls die Betätigungsmechanik sich in der eingerückten Position befindet. Die Bestimmung des Abstands zwischen der Drehachse und dem Teil des Parksperrenarms, welcher in das drehbar gelagerte Bauteil eingreift, hängt unter Anderem von den konkreten konstruktiven Gegebenheiten und des zur Verfügung stehenden Bauraums für den Parksperrenarm ab.

In einer bevorzugten Ausführungsform ist die Gelenkverbindung zwischen dem zweiten Arm der Kniegelenkanordnung und dem Parksperrenarm an einer Stelle des Parksperrenarms vorgesehen, welche näher an dem zum Eingriff in das Bauteil dienenden Teil des Parksperrenarms als an dem Drehlager des Parksperrenarms angeordnet ist. Durch eine solche Anordnung der Kniegelenkanordnung an dem Parksperrenarm können günstige Kraftverhältnisse zur Betätigung des Parksperrenarms erreicht werden.

Im Konkreten könnte der Parksperrenarm und/oder mindestens einer der Arme der Kniegelenkanordnung im Wesentlichen länglich ausgebildet sein und eine Längsachse aufweisen.

Die Kniegelenkanordnung und der Parksperrenarm könnten derart zueinander angeordnet sein, dass in der eingerückten Position des Parksperrenarms die Längsachsen der Arme der Kniegelenkanordnung im Wesentlichen senkrecht zu der Längsachse des Parksperrenarms ausgerichtet bzw. orientiert sind. Mit anderen Worten befindet sich die Kniegelenkanordnung in einem "gestreckten" oder nicht abgeknickten Zustand relativ zum Parksperrenarm, falls dieser sich in der eingerückten Position befindet. Die Längsachsen der zwei Arme der Kniegelenkanordnung können in dem "gestreckten" Zustand einen Winkel aufweisen, der leicht von dem Winkel von 180 Grad abweicht, um nämlich ein Abknicken der Kniegelenkanordnung in immer die gleiche Richtung zu gewährleisten.

Zur Begrenzung einer Auslenkbewegung der Kniegelenkanordnung in mindestens einer Richtung ist bevorzugt eine Begrenzungsfläche vorgesehen. Eine solche Begrenzungsfläche könnte beispielsweise in dem Gehäuse ausgebildet sein, in welchem die Parkbremse aufgenommen bzw. montiert ist. Weiterhin könnte eine solche Begrenzungsfläche durch ein an dem Gehäuse befestigtes Bauteil, beispielsweise einem Klotz, bereitgestellt werden. Auch in diese Richtung könnte ein leicht von 180° abweichender Winkel auftreten, wodurch eine Sicherheit gegen ein Auslegen bzw. Ausrücken erzielt werden kann.

Nun könnte der Aktuator mechanisch, hydraulisch oder pneumatisch betätigbar sein. Bevorzugt weist der Aktuator einen Kolben auf, welcher eben mechanisch, hydraulisch oder pneumatisch betätigbar ist. Ein solcher Kolben könnte auch mittels einer elektrisch betätigbaren Spindel bewegbar sein. Die Kniegelenkanordnung könnte zumindest teilweise zwischen dem Kolben und der Begrenzungsfläche angeordnet sein, und zwar insbesondere mit dem Bereich der Gelenkverbindung der zwei Arme der Kniegelenkanordnung. Hierdurch sind in vorteilhafter Weise - wenn überhaupt auf Grund des Vorliegens der Vorspannkraft - nur geringe Kräfte erforderlich, um z.B. die abgeknickte Kniegelenkanordnung wieder in ihren "gestreckten" Zustand zu verbringen. Bei einer solchen Anordnung der Kniegelenkanordnung zwischen der Begrenzungsfläche und dem Kolben kann die Kniegelenkanordnung eine Auslenkbewegung durchführen, wenn der Kolben entsprechend betätigt ist, das heißt wenn die mit der Kniegelenkanordnung zusammenwirkende Kolbenfläche des Kolbens von der Begrenzungsfläche beabstandet angeordnet ist.

In einer ganz besonders bevorzugten Ausführungsform weist der Aktuator einen Elektromagneten und ein bewegbar angeordnetes Ankerteil auf. Das bewegbar angeordnete Ankerteil könnte in einem Gehäuse, in welchem die Parkbremse angeordnet ist, durch entsprechende Führungsmittel hinsichtlich seiner Bewegung geführt und/oder begrenzt sein. Das Ankerteil führt dann eine Bewegung durch, wenn der Elektromagnet aktiviert oder deaktiviert wird. Hierzu ist das Ankerteil derart ausgebildet, dass es von dem Magnetfeld des Elektromagneten angezogen oder abgestoßen wird. Im Konkreten könnte das Ankerteil aus Metall gefertigt sein, insbesondere aus Eisen oder Stahl. Somit wird das Ankerteil von dem Elektromagneten angezogen, falls durch den Elektromagneten ein Magnetfeld aufgebaut wird. Alternativ könnte das Ankerteil ein permanentmagnetisches Material aufweisen, so dass es vom Magnetfeld des aktivierten Elektromagneten abgestoßen wird.

Die Kniegelenkanordnung könnte zumindest teilweise zwischen dem bewegbaren Ankerteil und der Begrenzungsfläche angeordnet sein, und zwar insbesondere mit dem Bereich der Gelenkverbindung der zwei Arme der Kniegelenkanordnung. Hierdurch sind in vorteilhafter Weise nur - wenn überhaupt auf Grund des Vorliegens der Vorspannkraft - geringe Kräfte erforderlich, um z.B. die abgeknickte Kniegelenkanordnung wieder in ihren "gestreckten" Zustand zu verbringen. Bei einer solchen Anordnung der Kniegelenkanordnung zwischen der Begrenzungsfläche und dem Ankerteil kann die Kniegelenkanordnung eine Auslenkbewegung durchführen, wenn das Ankerteil sich in einer von der Begrenzungsfläche beabstandeten Position befindet und/oder von dem Elektromagneten angezogen ist.

Im Konkreten könnte der Elektromagnet einen Kern und mindestens eine Spule aufweisen. Der Kern der Spule bzw. der Kern des Elektromagneten könnte ein Weicheisenmaterial aufweisen, was eine hohe Verstärkung des von der Spule erzeugten Magnetfeldes bewirkt. Der Kern könnte bevorzugt ein Blechstapelpaket aufweisen.

Bevorzugt weist der Elektromagnet zwei Spulen auf, welche um den gleichen Kern gewickelt bzw. angeordnet sein könnten. Eine Ansteuerung der Spulen des Elektromagneten mit einer entsprechend vorgesehenen Ansteuereinheit und einer elektrischen Leistungsstufe könnte derart vorgesehen sein, dass bei einem Bestromen der ersten Spule das Ankerteil eine vorgebbare Bewegung durchführt. Zum Ausführen einer vorgebbaren Bewegung des Ankerteils könnten von der Ansteuereinheit auch beide Spulen gleichzeitig bestromt werden. Bei einem Bestromen lediglich der zweiten Spule mit einem vorgebbaren Strom (Haltestrom) geeigneter Stromstärke wird das Ankerteil in einer Endanschlagstellung gehalten.

Es ist auch denkbar, dass zwei Elektromagnete vorgesehen sind oder dass der Elektromagnet zwei Spulen aufweist. Erst wenn beide Spulen bestromt bzw. beide Elektromagnete aktiviert werden, ist eine Bewegung des Ankerteils durchführbar. Bei einem Bestromen lediglich einer Spule bzw. beim Aktivieren lediglich eines Elektromagneten ist das Ankerteil in einer Endanschlagstellung haltbar, aber nicht bewegbar. Dies kann voraussetzen, dass die Spulen bzw. die Elektromagneten entsprechend einer Kraftlimitierung dimensioniert sind und geeignet angesteuert werden. Somit ist unter anderem auch aus Sicherheitsgründen ein Betätigen der Parkbremse nur dann möglich, wenn beide Spule bzw. Elektromagnete aktiviert sind.

Wenn das Ankerteil in einen Zustand verbracht werden soll, in welchem es gegen die Vorspannkraft zu bewegen ist, wird die Spule des Elektromagneten mit einem elektrischen Strom einer vorgebbaren ersten Stromstärke beaufschlagt. Diese erste Stromstärke ist derart bemessen, dass die vom Magnetfeld des Elektromagneten auf das Ankerteil wirkende Kraft derart hoch ist, dass jedenfalls die Bewegung des Ankerteils gegen die Vorspannkraft durchführbar ist.

Zum Halten des Ankerteils in dem Zustand, in welchem es gegen die Vorspannkraft zu bewegen war und das Ankerteil z.B. an dem Kern des Elektromagneten anliegt, wird die Spule des Elektromagneten mit einem elektrischen Strom einer vorgebbaren zweiten Stromstärke beaufschlagt, wobei die zweite Stromstärke kleiner als die erste Stromstärke ist. Das Ankerteil wird von dem Magnetfeld des Elektromagneten angezogen. Da das Ankerteil in diesem Zustand näher an dem Elektromagneten angeordnet ist, ist es auch ausreichend, das Ankerteil in dieser Stellung mit dem elektrischen Strom der zweiten Stromstärke in der Spule des Elektromagneten zu halten, da bei einem geringen Abstand des Ankerteils vom Elektromagneten (d.h. bei einem kleinen bzw. nahezu keinem Luftspalt) das Magnetfeld dennoch groß genug ist (wegen einer reziproken Abhängigkeit der magnetischen Feldstärke der Ortskoordinate als Funktion des Abstands zum Elektromagneten), auch wenn der hierfür erforderliche Haltestrom lediglich ein Bruchteil - beispielsweise ein 1/5 bis ein 1/6 - des elektrischen Stroms der ersten Stromstärke ist, der zum Bewegen des Ankerteils eingestellt wird.

Zum Verbringen des Ankerteils in eine von dem Elektromagneten beabstandete Position wird die Spule des Elektromagneten nicht mit elektrischen Strom beaufschlagt. Das Ankerteil wird also ganz einfach durch Unterbrechung des Stromflusses durch den Elektromagneten auf Grund der Vorspannkraft in die beabstandete Position verbracht. Dies ist letztendlich auch aus sicherheitstechnischen Gründen sinnvoll, denn bei einem Stromausfall befindet sich dann die erfindungsgemäße Parksperre automatisch in dem verriegelten Zustand bzw. die Betätigungsmechanik der Parkbremse befindet sich in ihrer eingerückten Position.

Es sei ganz besonders darauf hingewiesen, dass der Strom, mit dem der Elektromagnet beaufschlagt wird, gepulst sein kann und insbesondere pulsweitenmoduliert ist. Hierdurch ist in ganz besonders vorteilhafter Weise der Energiebedarf zum Halten des Ankerteils in der Stellung, in welcher die Vorspannkraft zu überwinden ist, sehr gering.

Insbesondere bei einem Traktor, also einem landwirtschaftlichen Nutzfahrzeug, weist das zu bremsende Bauteil ein bezüglich des Antriebsstrangs des Nutzfahrzeugs abtriebsseitig angeordnetes Zahnrad auf, welches mit mindestens einem Rad des Nutzfahrzeugs in Drehverbindung steht, wobei eine solche Drehverbindung bevorzugt nicht durch eine Kupplung getrennt werden kann.

Hinsichtlich eines Fahrzeugs und insbesondere hinsichtlich eines landwirtschaftlichen oder industriellen Nutzfahrzeugs mit einer Parkbremse wird die eingangs genannte Aufgabe durch die Merkmale des Patentanspruchs 17 gelöst. Demgemäß ist ein erfindungsgemäßes Fahrzeug durch eine Vorrichtung zur Betätigung der Parkbremse nach einem der Ansprüche 1 bis 16 gekennzeichnet. Zur Vermeidung von Wiederholungen wird auf den eine solche Parkbremse betreffenden vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnungen zu verweisen. In Verbindung mit der Erläuterung der bevorzugten Ausführungsbeispiele der Erfindung anhand der Zeichnungen werden auch im Allgemeinen bevorzugte Ausgestaltungen und Weiterbildungen der Lehre erläutert. In den Zeichnungen zeigen jeweils in einer schematischen Darstellung
- Fig. 1: eine Vorrichtung zum Betätigen einer Parkbremse eines Fahrzeugs, wie sie aus dem Stand der Technik bekannt ist,
- Fig. 2: ein Ausführungsbeispiel einer erfindungsgemäßen Betätigungsvorrichtung einer Parkbremse eines Fahrzeugs, bei welchem die Betätigungsmechanik sich in einem ausgerückten Zustand befindet,
- Fig. 3: das Ausführungsbeispiel aus Fig. 2, bei welchem die Betätigungsmechanik sich in einem eingerückten Zustand befindet, und
- Fig. 4: ein weiteres Ausführungsbeispiel einer erfindungsgemäßen Betätigungsvorrichtung einer Parkbremse eines Fahrzeugs.

In den Figuren sind gleiche oder ähnliche Bauteile bzw. Baugruppen mit denselben Bezugszeichen gekennzeichnet.

Fig. 1 zeigt in einer schematischen Darstellung einer Vorrichtung zur Betätigung einer Parkbremse 10, wie sie aus dem Stand der Technik bekannt ist und beispielsweise bei Traktoren der Anmelderin derzeit eingesetzt wird. Die Parkbremse 10 weist eine Betätigungsmechanik 12 und einen Aktuator 14 auf. Die Betätigungsmechanik 12 selbst umfasst einen im Wesentlichen länglich ausgebildeten Parksperrenarm 16, welcher an seinem einen Ende 18 gelenkig an einem Gehäuseteil 20 gelagert ist. Bei der gelenkigen Lagerung des Parksperrenarms 16 an dem Gehäuseteil 20 handelt es sich um eine Drehverbindung, welche um eine Achse 22 erfolgt, die senkrecht zur Zeichenebene der Fig. 1 angeordnet ist. Der Parksperrenarm 16 weist ein Teil bzw. ein zweites Ende 24 auf, welches mit dem Zahnrad 26 in Eingriff gebracht werden kann. In Fig. 1 ist der Parksperrenarm 16 bzw. die Betätigungsmechanik 12 in der eingerückten Position gezeigt. Das Zahnrad 26 ist ein Bauteil, welches um die Welle 28 drehbar an einem Gehäuseteil 20 gelagert ist. Die Welle 28 steht mit mindestens einem in den Fig. 1 bis 4 nicht gezeigten Rad des Fahrzeugs mittelbar oder unmittelbar in Drehverbindung. Diese Drehverbindung zwischen der Welle 28 und dem Rad kann in diesem Ausführungsbeispiel jedenfalls nicht - beispielsweise mit einer Kupplung - unterbrochen werden.

Der Aktuator 14 umfasst eine in dem Lager 30 drehbar angeordnete Welle 32, die an ihrem dem Parksperrenarm 16 zugewandten Ende ein zylinderförmiges Bauteil 34 mit einer Kulissenoberfläche 36 aufweist. Der Aktuator 14 aus Fig. 1 ist derart angeordnet, dass bei einer Drehung des Aktuators 14 bzw. der Welle 32 um seine Längsrichtung - d.h. in Richtung des Doppelpfeils - der Parksperrenarm 16 eine Drehbewegung um die Achse 22 ausführen kann, so dass das zweite Ende 24 des Parksperrenarms 16 in die ausgerückte Position verbringbar ist. Obwohl die ineinander eingreifenden Bauteile - die Zähne 38 des Zahnrads 26 und das im Wesentlichen komplementär zu den Zähnen 38 ausgebildete zweite Ende 24 des Parksperrenarms 16 - ein nahezu reibungsfreies Ausrücken begünstigen, da diese Bauteile bzw. die Verzahnungen nicht hinterschnitten, sondern abweisend ausgebildet sind, ist bei einer kraftbeaufschlagten Betätigungsmechanik 12 eine Reibung zwischen dem Parksperrenarm 16 und der Kulissenoberfläche 36 zu überwinden, was einen erhöhten Kraftbedarf bei der in Fig. 1 nicht gezeigten Mechanik zum Drehen der Welle 32 des Aktuators 14 erfordert.

Fig. 2 zeigt ein Ausführungsbeispiel einer erfindungsgemäßen Betätigungsvorrichtung 12 einer Parkbremse 10, welche bezüglich des zu bremsenden Zahnrads 26 und der Anordnung des Parksperrenarms 16 im Wesentlichen eine vergleichbare Funktion zu dem Ausführungsbeispiel gemäß Fig. 1 aufweist. Der Parksperrenarm 16 ist in Fig. 2 in der ausgerückten Position gezeigt, das heißt das Zahnrad 26 und die damit drehfest verbundene Welle 28 kann sich drehen, ohne dass das zweite Ende 24 des Parksperrenarms 16 in die Verzahnung des Zahnrads 26 eingreift. Entsprechend kann der Parksperrenarm 16 aus Fig. 1 in eine ausgerückte Position, wie sie in Fig. 2 gezeigt ist, gebracht werden.

Die Betätigungsmechanik 12 der Parkbremse aus Fig. 2 weist in erfindungsgemäßer Weise eine Kniegelenkanordnung 40 auf. Die Kniegelenkanordnung 40 und der Parksperrenarm 16 wirken derart miteinander zusammen, dass die Bewegung des Parksperrenarms 16 von der Kniegelenkanordnung 40 in Abhängigkeit der Betätigung des Aktuators 14 aus Fig. 2 ausführbar ist.

Die Kniegelenkanordnung 40 umfasst zwei im Wesentlichen länglich oder geradlinig ausgebildete Arme 42, 44. Der erste Arm 42 der Kniegelenkanordnung 40 ist mit seinem einen Ende mit einer Gelenkverbindung 46 mit dem zweiten Arm 44 der Kniegelenkanordnung 40 verbunden. Bei dieser Gelenkverbindung 46 handelt es sich um eine Achsgelenkverbindung. Mit dem anderen Ende ist der erste Arm 42 der Kniegelenkanordnung 40 mit einem Gehäuseteil 20 gelenkig verbunden, und zwar drehbar um eine Achse bzw. Gelenkverbindung 48. Auch hierbei handelt es sich um eine Achsgelenkverbindung. Der zweite Arm 44 ist durch eine Gelenkverbindung 50 mit dem Parksperrenarm 16 gelenkig verbunden. Sowohl die Gelenkverbindung 50 als auch die Gelenkverbindung 48 sind in Form einer Achsgelenkverbindung ausgebildet und ermöglichen jeweils nur eine Drehung um einen Freiheitsgrad, nämlich um eine Achse senkrecht zu der Zeichenebene aus Fig. 2.

Die Gelenkverbindung 50 ist an einer Stelle an dem Parksperrenarm 16 angeordnet, welche näher an dem zweiten Ende 24 als an dem ersten Ende 18 des Parksperrenarms 16 angeordnet ist. Hierdurch sind die zur Wirkung kommenden Hebelärme entsprechend ausgebildet, so dass eine günstige Kräftebilanz der Betätigungsmechanik 12 erzielbar ist.

Der in Fig. 2 gezeigte Aktuator 14 umfasst einen Elektromagneten 52, der zwei Spulen 54, 56 sowie einen fest am Gehäuse angeordneten Kern 58 aufweist. Weiterhin umfasst der Aktuator 14 aus Fig. 2 ein Ankerteil 60, welches eine im Wesentlichen lineare Bewegung durchführen kann und welches mit Hilfe von in Fig. 2 nicht gezeigten in dem Gehäuse angeordneten Führungsmitteln geführt wird. Dementsprechend ist das Ankerteil 60 des Aktuators 14 in diesem Ausführungsbeispiel durch das vom Elektromagneten 52 erzeugte Magnetfeld bewegbar. Das Ankerteil 60 wird mittels der Feder 62 mit einer Vorspannkraft beaufschlagt, welche mit einem Ende an dem Kern 58 des Elektromagneten 52 und an ihrem anderen Ende an dem Ankerteil 60 befestigt ist. Die von der Feder 62 auf das Ankerteil 60 ausgeübte Vorspannkraft wirkt in linker Richtung, und zwar derart, dass das Ankerteil 60 in Richtung des Anschlags 64 gedrängt wird. Der Anschlag 64 ist an dem in Fig. 2 nicht vollständig gezeigten Gehäuse befestigt und stellt die Begrenzungsfläche 66 zur Verfügung. Wie bereits erwähnt, befindet sich die Kniegelenkanordnung 40 aus Fig. 2 in dem abgeknickten Zustand, das heißt das Ankerteil 60 ist in seiner rechten Position am Kern 58 des Elektromagneten 52 anschlagend und beabstandet von der Begrenzungsfläche 66 angeordnet. Dementsprechend ist zumindest der Teil bzw. der Bereich um die Gelenkverbindung 46 der Kniegelenkanordnung 40 zwischen der Begrenzungsfläche 66 und dem Ankerteil 60 angeordnet.

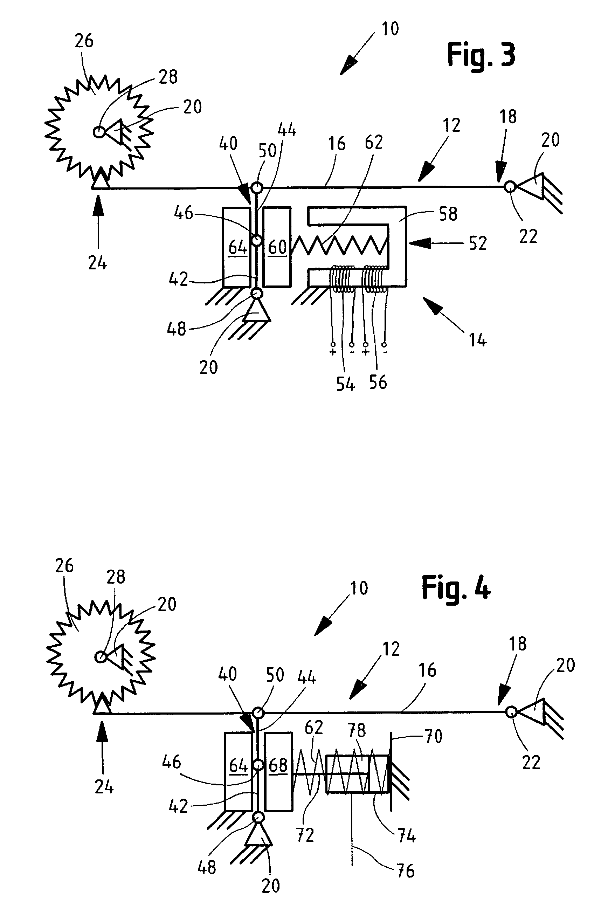

Fig. 3 zeigt ebenfalls in einer schematischen Darstellung das Ausführungsbeispiel der erfindungsgemäßen Parkbremse 10 aus Fig. 2, wobei sich die Betätigungsmechanik 12 gemäß Fig. 3 in der eingerückten Position befindet. Dementsprechend befindet sich die Kniegelenkanordnung 40 in ihrem gestreckten Zustand und das Ankerteil 60 befindet sich in seiner linken Position. In dieser Position ist das Ankerteil 60 und die Gelenkverbindung 46 nahezu unmittelbar an der Begrenzungsfläche 66 bzw. dem Anschlag 64 angeordnet. Die Längsachsen der zwei Arme 42, 44 sind in dieser Position senkrecht zur Längsachse des Parksperrenarms 16 orientiert.

Der in den Fig. 2 und 3 gezeigte Elektromagnet 52 weist zwei Spulen 54, 56 auf. Diese sind mit einer in den Fig. 2 und 3 nicht gezeigten elektrischen Leistungsstufe sowie einer entsprechenden Ansteuereinheit elektrisch verbunden. Zum Ausführen der Bewegung des Ankerteils 60 von der linken (in Fig. 3 gezeigten) Position zu der rechten (in Fig. 2 gezeigten) Position entgegen der Vorspannkraft der Feder 62 wird die erste Spule 54 mit elektrischem Strom einer vorgebbaren Stromstärke bestromt. Hierdurch erzeugt der Elektromagnet 52 ein Magnetfeld, das eine Anziehungskraft auf das Ankerteil 60 ausübt, welche größer als die in entgegengesetzter Richtung wirkende Vorspannkraft der Feder 62 ist. Sobald sich das Ankerteil 60 in der in Fig. 2 gezeigten rechten Position befindet, wird lediglich die zweite Spule 56 mit einem elektrischen Strom einer zweiten vorgebbaren Stromstärke bestromt. Die Stromstärke dieses Haltestroms ist kleiner als die Stromstärke des Stroms, der durch die erste Spule 54 zum Bewegen des Ankerteils 60 fließt.

Fig. 4 zeigt ein zweites Ausführungsbeispiel einer erfindungsgemäßen Betätigungsvorrichtung, bei welcher verglichen zu dem Ausführungsbeispiel aus den Fig. 2 und 3 lediglich der Aktuator 14 und insbesondere das dem Ankerteil 60 aus den Fig. 2 und 3 entsprechende Kolbenteil 68 hydraulisch betätigbar ist. Auch das Kolbenteil 68 wird von der Feder 62 in seine linke, in Fig. 4 gezeigte Position gedrängt. Die Feder 62 ist an ihrem linken Ende an den Kolbenteil 68 und an ihrem rechten Ende an dem Gehäuseteil 70 befestigt. Das Kolbenteil 68 ist fest mit der Kolbenstange 72 verbunden, welche sich relativ zu dem Kolbengehäuse 74 bewegen kann. Über die Versorgungsleitung 76 kann Hydraulikflüssigkeit dem Kolbenstangenraum 78 des Kolbengehäuses 74 zugeführt oder aus dem Kolbenstangenraum 78 abgelassen werden. Falls unter Druck stehende Hydraulikflüssigkeit in den Kolbenstangenraum 78 eingeleitet wird, bewegt sich das Kolbenteil 68 sowie die Kolbenstange 72 nach rechts in eine rechte Position, welche vergleichbar zu dem Ankerteil 60 aus Fig. 2 ist. Das Ausführungsbeispiel aus Fig. 4 ist lediglich in einer eingerückten Position der Betätigungsmechanik 12 gezeigt. Lediglich der Vollständigkeit halber sei darauf hingewiesen, dass es auch eine ausgerückte Position der Betätigungsmechanik 12 aus Fig. 4 gibt, welche - wie bereit angedeutet - vergleichbar zu dem Zustand der Kniegelenkanordnung 40 und dem Parksperrenarm 16 aus Fig. 2 ist. Der Aktuator 14 aus Fig. 4 könnte auch pneumatisch betätigbar sein.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zur Betätigung einer Parkbremse (10) eines Fahrzeugs, insbesondere eines landwirtschaftlichen oder industriellen Nutzfahrzeugs, mit einer Betätigungsmechanik (12) und einem Aktuator (14), wobei die Betätigungsmechanik (12) mittels einer Vorspannkraft in eine eingerückte Position drängbar ist und wobei mittels des Aktuators (14) gegen die Vorspannkraft eine Bewegung der Betätigungsmechanik (12) in eine ausgerückte Position ausführbar ist, wobei die Betätigungsmechanik (12) einen drehbar um eine Achse (22) gelagerten Parksperrenarm (16) aufweist, welcher in der eingerückten Position formschlüssig in ein drehbar gelagertes Bauteil (26) eingreift,
**dadurch gekennzeichnet,**
**dass** die Betätigungsmechanik (12) eine Kniegelenkanordnung (40) aufweist, dass die Kniegelenkanordnung (40) und der Parksperrenarm (16) derart miteinander zusammenwirken, dass die Bewegung des Parksperrenarms (16) von der Kniegelenkanordnung (40) in Abhängigkeit einer Betätigung des Aktuators (14) ausführbar ist.

2. Vorrichtung nach Anspruch 1,
**dadurch gekennzeichnet,**
**dass** die Kniegelenkanordnung (40) zwei miteinander gelenkig verbundene Arme (42, 44) aufweist und dass die Gelenkverbindung (46) zwischen den zwei Armen (42, 44) ein Gabelgelenk oder ein Achsgelenk aufweisen kann.

3. Vorrichtung nach Anspruch 2,
**dadurch gekennzeichnet,**
**dass** der erste Arm (42) der Kniegelenkanordnung (40) drehbar um eine Achse (48) an einem Gehäuseteil (20) gelagert ist und/oder dass der zweite Arm (44) der Kniegelenkanordnung (40) gelenkig mit dem Parksperrenarm (16) verbunden ist.

4. Vorrichtung nach Anspruch 2 oder 3,
**dadurch gekennzeichnet,**
**dass** die Gelenkverbindung (48) zwischen dem ersten Arm (42) der Kniegelenkanordnung (40) und dem Gehäuseteil (20) ein Gabelgelenk oder ein Achsgelenk aufweist und/oder dass die Gelenkverbindung (50) zwischen dem zweiten Arm (44) der Kniegelenkanordnung (40) und dem Parksperrenarm (16) ein Gabelgelenk oder ein Achsgelenk aufweist.

5. Vorrichtung nach einem der Ansprüche 1 bis 4,
**dadurch gekennzeichnet,**
**dass** der Parksperrenarm (16) derart ausgebildet ist, dass ein von der Drehachse (22) beabstandeter Teil (24) des Parksperrenarms (16) in das drehbar gelagerte Bauteil (26) eingreift, falls die Betätigungsmechanik (12) sich in der eingerückten Position befindet.

6. Vorrichtung nach einem der Ansprüche 1 bis 5,
**dadurch gekennzeichnet,**
**dass** die Gelenkverbindung (50) zwischen dem zweiten Arm (46) der Kniegelenkanordnung (40) und dem Parksperrenarm (16) an einer Stelle des Parksperrenarms (16) vorgesehen ist, welche näher an dem zum Eingriff in das Bauteil (26) dienenden Teil (24) des Parksperrenarms (16) als an dem Drehlager (22) des Parksperrenarms (16) angeordnet ist.

7. Vorrichtung nach einem der Ansprüche 1 bis 6,
**dadurch gekennzeichnet,**
**dass** der Parksperrenarm (16) und/oder mindestens einer der Arme (42, 44) der Kniegelenkanordnung (40) im Wesentlichen länglich ausgebildet ist und eine Längsachse aufweis**t**.

8. Vorrichtung nach Anspruch 7,
**dadurch gekennzeichnet,**
**dass** die Kniegelenkanordnung (40) und der Parksperrenarm (16) derart zueinander angeordnet sind, dass in der eingerückten Position des Parksperrenarms (16) die Längsachsen der Arme (42, 44) der Kniegelenkanordnung (40) im Wesentlichen senkrecht zu der Längsachse des Parksperrenarms (16) ausgerichtet sind.

9. Vorrichtung nach einem der Ansprüche 1 bis 8,
**dadurch gekennzeichnet,**
**dass** eine Begrenzungsfläche (66) vorgesehen ist, mit welcher eine Auslenkbewegung der Kniegelenkanordnung (40) in mindestens einer Richtung begrenzbar ist.

10. Vorrichtung nach einem der Ansprüche 1 bis 9,
**dadurch gekennzeichnet,**
**dass** der Aktuator (14) mechanisch, hydraulisch oder pneumatisch betätigbar ist und vorzugsweise einen Kolben (68, 72) aufweist.

11. Vorrichtung nach Anspruch 10,
**dadurch gekennzeichnet,**
**dass** die Kniegelenkanordnung (40) zumindest teilweise zwischen dem Kolben (68) und der Begrenzungsfläche (66) angeordnet ist und dass die Kniegelenkanordnung (40) eine Auslenkbewegung durchführen kann, wenn der Kolben (68) entsprechend betätigt ist.

12. Vorrichtung nach einem der Ansprüche 1 bis 9,
**dadurch gekennzeichnet,**
**dass** der Aktuator (14) einen Elektromagneten (52) und ein bewegbar angeordnetes Ankerteil (60) aufweist.

13. Vorrichtung nach Anspruch 12,
**dadurch gekennzeichnet,**
**dass** die Kniegelenkanordnung (40) zumindest teilweise zwischen dem bewegbaren Ankerteil (60) und der Begrenzungsfläche (66) angeordnet ist und dass die Kniegelenkanordnung (40) eine Auslenkbewegung durchführen kann, wenn das Ankerteil (60) sich in einer von der Begrenzungsfläche (66) beabstandeten Position befindet und/oder von dem Elektromagneten (52) angezogen ist.

14. Vorrichtung nach Anspruch 12 oder 13,
**dadurch gekennzeichnet,**
**dass** der Elektromagnet (52) einen Kern (58) und mindestens eine Spule (54, 56) aufweist.

15. Vorrichtung nach Anspruch 14,
**dadurch gekennzeichnet,**
**dass** der Elektromagnet (52) zwei Spulen (54, 56) aufweist und dass bei einem Bestromen der ersten Spule (54) eine Bewegung des Ankerteils (60) durchführbar ist und dass bei einem Bestromen der zweiten Spule (56) das Ankerteil (60) in einer Endanschlagstellung haltbar ist.

16. Vorrichtung nach Anspruch 14,
**dadurch gekennzeichnet,**
**dass** zwei Elektromagnete vorgesehen sind oder dass der Elektromagnet (52) zwei Spulen (54, 56) aufweist, dass bei einem Bestromen beider Spulen (54, 56) oder beim Aktivieren der beiden Elektromagneten eine Bewegung des Ankerteils (60) durchführbar ist und dass bei einem Bestromen lediglich einer Spule (56) oder beim Aktivieren lediglich eines Elektromagneten das Ankerteil (60) in einer Endanschlagstellung haltbar ist.

17. Vorrichtung nach einem der Ansprüche 1 bis 16,
**dadurch gekennzeichnet,**
**dass** das Bauteil (26) ein bezüglich des Antriebsstrangs des Fahrzeugs abtriebsseitig angeordnetes Zahnrad aufweist, welches mit mindestens einem Rad des Fahrzeugs in Drehverbindung steht.

18. Fahrzeug, insbesondere ein landwirtschaftliches oder industrielles Nutzfahrzeug, mit einer Parkbremse, **gekennzeichnet durch** eine Vorrichtung zur Betätigung der Parkbremse nach einem der Ansprüche 1 bis 17.

## Claims

1. Device for actuating a parking brake (10) of a vehicle, in particular of an agricultural or industrial utility vehicle, having an actuating mechanism (12) and an actuator (14), wherein the actuating mechanism (12) can be forced by means of a pretensioning force into an engaged position and wherein a movement of the actuating mechanism (12) into a disengaged position can be realized by means of the actuator (14) counter to the pretensioning force, wherein the actuating mechanism (12) has a parking lock arm (16) which is mounted rotatably about an axis (22) and which, in the engaged position, engages positively in a rotatably mounted component (26),
**characterized**
**in that** the actuating mechanism (12) has a toggle joint arrangement (40), in that the toggle joint arrangement (40) and the parking lock arm (16) mutually interact in such a way that the movement of the parking lock arm (16) can be realized by the toggle joint arrangement (40) in dependence on an actuation of the actuator (14).

2. Device according to Claim 1,
**characterized**
**in that** the toggle joint arrangement (40) has two articulately mutually connected arms (42, 44), and in that the articulation (46) between the two arms (42, 44) can have a fork joint or an axle joint.

3. Device according to Claim 2,
**characterized**
**in that** the first arm (42) of the toggle joint arrangement (40) is mounted rotatably about an axis (48) on a housing part (20), and/or in that the second arm (44) of the toggle joint arrangement (40) is articulately connected to the parking lock arm (16).

4. Device according to Claim 2 or 3,
**characterized**
**in that** the articulation (48) between the first arm (42) of the toggle joint arrangement (40) and the housing part (20) has a fork joint or an axle joint, and/or in that the articulation (50) between the second arm (44) of the toggle joint arrangement (40) and the parking lock arm (16) has a fork joint or an axle joint.

5. Device according to one of Claims 1 to 4,
**characterized**
**in that** the parking lock arm (16) is configured such that a part (24) of the parking lock arm (16) which is remote from the rotation axis (22) engages in the rotatably mounted component (26) if the actuating mechanism (12) is in the engaged position.

6. Device according to one of Claims 1 to 5,
**characterized**
**in that** the articulation (50) between the second arm (46) of the toggle joint arrangement (40) and the parking lock arm (16) is provided at a point on the parking lock arm (16) which is disposed closer to that part (24) of the parking lock arm (16) which serves to engage in the component (26) than to the pivot bearing (22) of the parking lock arm (16).

7. Device according to one of Claims 1 to 6,
**characterized**
**in that** the parking lock arm (16) and/or at least one of the arms (42, 44) of the toggle joint arrangement (40) is of substantially oblong configuration and has a longitudinal axis.

8. Device according to Claim 7,
**characterized**
**in that** the toggle joint arrangement (40) and the parking lock arm (16) are arranged one to another in such a way that, in the engaged position of the parking lock arm (16), the longitudinal axes of the arms (42, 44) of the toggle joint arrangement (40) are aligned substantially perpendicular to the longitudinal axis of the parking lock arm (16).

9. Device according to one of Claims 1 to 8,
**characterized**
**in that** a limiting face (66) is provided, with which a deflection movement of the toggle joint arrangement (40) can be limited in at least one direction.

10. Device according to one of Claims 1 to 9,
**characterized**
**in that** the actuator (14) is mechanically, hydraulically or pneumatically actuable and preferably has a piston (68, 72).

11. Device according to Claim 10,
**characterized**
**in that** the toggle joint arrangement (40) is disposed at least partially between the piston (68) and the limiting face (66), and in that the toggle joint arrangement (40) can perform a deflection movement when the piston (68) is actuated accordingly.

12. Device according to one of Claims 1 to 9,
**characterized**
**in that** the actuator (14) has an electromagnet (52) and a movably disposed armature element (60).

13. Device according to Claim 12,
**characterized**
**in that** the toggle joint arrangement (40) is disposed at least partially between the movable armature element (60) and the limiting face (66), and in that the toggle joint arrangement (40) can perform a deflection movement when the armature element (60) is in a position remote from the limiting face (66) and/or is attracted by the electromagnet (52).

14. Device according to Claim 12 or 13,
**characterized**
**in that** the electromagnet (52) has a core (58) and at least one coil (54, 56).

15. Device according to Claim 14,
**characterized**
**in that** the electromagnet (52) has two coils (54, 56), and in that, when the first coil (54) is energized, a movement of the armature element (60) can be performed, and in that, when the second coil (56) is energized, the armature element (60) can be held in an end stop setting.

16. Device according to Claim 14,
**characterized**
**in that** two electromagnets are provided or in that the electromagnet (52) has two coils (54, 56), in that, when both coils (54, 56) are energized or when the two electromagnets are activated, a movement of the armature element (60) can be performed, and in that, when only one coil (56) is energized or when only one electromagnet is activated, the armature element (60) can be held in an end stop setting.

17. Device according to one of Claims 1 to 16,
**characterized**
**in that** the component (26) has a gearwheel, which is disposed on the output side relative to the drive train of the vehicle and is rotatably connected to at least one wheel of the vehicle.

18. Vehicle, in particular an agricultural or industrial utility vehicle, having a parking brake,
**characterized by** a device for actuating the parking brake according to one of Claims 1 to 17.

## Revendications

1. Dispositif pour l'actionnement d'un frein de stationnement (10) d'un véhicule, en particulier d'un véhicule utilitaire agricole ou industriel, comprenant un mécanisme d'actionnement (12) et un actionneur (14), le mécanisme d'actionnement (12) pouvant être poussé au moyen d'une force de précontrainte dans une position embrayée et un mouvement du mécanisme d'actionnement (12) dans une position débrayée pouvant être effectué au moyen de l'actionneur (14) à l'encontre de la force de précontrainte, le mécanisme d'actionnement (12) présentant un bras de blocage de stationnement (16) monté à rotation autour d'un axe (22), qui vient en prise dans la position embrayée par engagement positif avec un composant (26) monté à rotation,
**caractérisé en ce que**
le mécanisme d'actionnement (12) présente un agencement de genouillère (40), **en ce que** l'agencement de genouillère (40) et le bras de blocage de stationnement (16) coopèrent l'un avec l'autre de telle sorte que le mouvement du bras de blocage de stationnement (16) puisse être réalisé par l'agencement de genouillère (40) en fonction d'un actionnement de l'actionneur (14).

2. Dispositif selon la revendication 1,
**caractérisé en ce que**
l'agencement de genouillère (40) présente deux bras (42, 44) connectés l'un à l'autre de manière articulée, et **en ce que** la connexion articulée (46) entre les deux bras (42, 44) peut présenter une articulation à chape ou une articulation pivotante.

3. Dispositif selon la revendication 2,
**caractérisé en ce que**
le premier bras (42) de l'agencement de genouillère (40) est monté de manière à pouvoir tourner autour d'un axe (48) sur une partie de boîtier (20), et/ou **en ce que** le deuxième bras (44) de l'agencement de genouillère (40) est connecté de manière articulée au bras de blocage de stationnement (16).

4. Dispositif selon la revendication 2 ou 3,
**caractérisé en ce que**
la connexion articulée (48) entre le premier bras (42) de l'agencement de genouillère (40) et la partie de boîtier (20) présente une articulation à chape ou une articulation pivotante et/ou **en ce que** la connexion articulée (50) entre le deuxième bras (44) de l'agencement de genouillère (40) et le bras de blocage de stationnement (16) présente une articulation à chape ou une articulation pivotante.

5. Dispositif selon l'une quelconque des revendications 1 à 4,
**caractérisé en ce que**
le bras de blocage de stationnement (16) est réalisé de telle sorte qu'une partie (24) du bras de blocage de stationnement (16), espacée de l'axe de rotation (22), vienne en prise dans le composant (26) monté à rotation, si le mécanisme d'actionnement (12) se trouve dans la position embrayée.

6. Dispositif selon l'une quelconque des revendications 1 à 5,
**caractérisé en ce que**
la connexion articulée (50) entre le deuxième bras (46) de l'agencement de genouillère (40) et le bras de blocage de stationnement (16) est prévue à un endroit du bras de blocage de stationnement (16) qui est disposé plus près de la partie (24) du bras de blocage de stationnement (16) servant à l'engagement dans le composant (26) que du palier pivotant (22) du bras de blocage de stationnement (16).

7. Dispositif selon l'une quelconque des revendications 1 à 6,
**caractérisé en ce que**
le bras de blocage de stationnement (16) et/ou au moins l'un des bras (42, 44) de l'agencement de genouillère (40) sont réalisés essentiellement sous forme allongée et présentent un axe longitudinal.

8. Dispositif selon la revendication 7,
**caractérisé en ce que**
l'agencement de genouillère (40) et le bras de blocage de stationnement (16) sont disposés l'un par rapport à l'autre de telle sorte que dans la position embrayée du bras de blocage de stationnement (16), les axes longitudinaux des bras (42, 44) de l'agencement de genouillère (40) soient orientés essentiellement perpendiculairement à l'axe longitudinal du bras de blocage de stationnement (16).

9. Dispositif selon l'une quelconque des revendications 1 à 8,
**caractérisé en ce que**
l'on prévoit une surface de limitation (66), avec laquelle un mouvement de déviation de l'agencement de genouillère (40) peut être limité dans au moins une direction.

10. Dispositif selon l'une quelconque des revendications 1 à 9,
**caractérisé en ce que**
l'actionneur (14) peut être actionné par voie mécanique, hydraulique ou pneumatique, et présente de préférence un piston (68, 72).

11. Dispositif selon la revendication 10,
**caractérisé en ce que**
l'agencement de genouillère (40) est disposé au moins en partie entre le piston (68) et la surface de limitation (66), et **en ce que** l'agencement de genouillère (40) peut effectuer un mouvement de déviation lorsque le piston (68) est actionné en conséquence.

12. Dispositif selon l'une quelconque des revendications 1 à 9,
**caractérisé en ce que**
l'actionneur (14) présente un électroaimant (52) et une partie d'armature (60) disposée de manière mobile.

13. Dispositif selon la revendication 12,
**caractérisé en ce que**
l'agencement de genouillère (40) est disposé au moins en partie entre la partie d'armature mobile (60) et la surface de limitation (66) et **en ce que** l'agencement de genouillère (40) peut effectuer un mouvement de déviation, lorsque la partie d'armature (60) se trouve dans une position espacée de la surface de limitation (66) et/ou est attirée par l'électroaimant (52).

14. Dispositif selon la revendication 12 ou 13,
**caractérisé en ce que**
l'électroaimant (52) présente un noyau (58) et au moins une bobine (54, 56).

15. Dispositif selon la revendication 14,
**caractérisé en ce que**
l'électroaimant (52) présente deux bobines (54, 56) et **en ce que** dans le cas d'une alimentation électrique à travers la première bobine (54), un mouvement de la partie d'armature (60) peut être effectué et **en ce que** dans le cas d'une alimentation électrique à travers la deuxième bobine (56), la partie d'armature (60) peut être maintenue dans une position de fin de course.

16. Dispositif selon la revendication 14,
**caractérisé en ce que**
l'on prévoit deux électroaimants ou **en ce que** l'électroaimant (52) présente deux bobines (54, 56), **en ce que** dans le cas d'une alimentation électrique à travers les deux bobines (54, 56) ou de l'activation des deux électroaimants, un mouvement de la partie d'armature (60) peut être effectué et **en ce que** dans le cas d'une alimentation électrique à travers seulement une bobine (56) ou de l'activation de seulement un électroaimant, la partie d'armature (60) peut être maintenue dans une position de fin de course.

17. Dispositif selon l'une quelconque des revendications 1 à 16,
**caractérisé en ce que**
le composant (26) présente une roue dentée disposée du côté de la sortie par rapport à la chaîne de transmission du véhicule, laquelle est en liaison rotative avec au moins une roue du véhicule.

18. Véhicule, en particulier un véhicule utilitaire agricole ou industriel, comprenant un frein de stationnement, **caractérisé par** un dispositif pour l'actionnement du frein de stationnement selon l'une quelconque des revendications 1 à 17.
